# EUROPÄISCHE PATENTANMELDUNG

(11) **EP 1 362 968 A1**
(43) Veröffentlichungstag der Anmeldung: **19.11.2003**
(21) Anmeldenummer: 02011026.8
(22) Anmeldetag: 17.05.2002
(51) Int. Cl.: E04F 15/02, E04F 15/20

(54) **Paneel mit integrierter Schalldämmung und Klebefunktion**

(71) Anmelder: Fritz Egger GmbH & Co, 3105 Unterradlberg (AT)
(72) Erfinder: Steinwender, Martin, A-2380 Perchtoldsdorf (AT); Emmerich, Horvath, A-6383 Erpfendorf (AT); Reiter, Thomas, A-6380 St. Johann in Tirol (AT); Böhm, Jürgen, A-5081 Anif (AT)
(74) Vertreter: Cohausz & Florack

(57) **Zusammenfassung**

Paneel, insbesondere Laminatfußbodenpaneel, mit einer eine Oberseite (12) und eine Unterseite (14) aufweisenden Trägerplatte (16), mit einer mit der Unterseite (14) der Trägerplatte (16) verbundenen Schallschutzschicht (18), bei dem das technische Problem, ein Paneel eines Hartfußbodenbelags mit einer damit verbundenen Schallschutzschicht anzugeben, mit dem das Verkleben des Paneels mit dem Untergrund ohne einen bauseitig eingesetzten Kleber ermöglicht wird, dadurch gelöst wird, dass die Unterseite (20) der Schallschutzschicht (18) zumindest abschnittsweise eine Klebewirkung aufweist.

## Beschreibung

Die Erfindung betrifft ein Paneel eines Hartfußbodenbelags, insbesondere eines Laminatfußbodens, mit den Merkmalen des Oberbegriffes des Anspruches 1.

Der Begriff Hartfußbodenbelag wird in Abgrenzung zu Fußbodenbelägen verwendet, deren Platten oder Bahnen flexibel oder elastisch sind, wie es beispielsweise für PVC-Bodenbeläge der Fall ist. Ein typisches Beispiel für einen Hartfußbodenbelag ist der Laminatfußbodenbelag, der aus harten Paneelen besteht, die flächig auf einem Untergrund verlegt werden.

Der herkömmliche Aufbau besteht aus einem Unterboden, einer Schallschutzschicht und einem Hartfußbodenbelag bestehend aus einer Mehrzahl von Paneelen. Der Unterboden ist üblicher weise ein Estrich, es sind aber alle anderen möglichen Unterböden denkbar. Die Schallschutzschicht befindet sich zwischen dem Unterboden und den Paneelen und hat die Aufgabe sowohl den Schall, der durch die Nutzung des Fußbodenbelags an den Unterboden übertragen wird, zu mindern - hier spricht der Fachmann von Trittschall - als auch den Schall, der vom Hartbelag in den darüber befindlichen Raum abgestrahlt wird - hier spricht der Fachmann von Raumschall - zu verringern. Die Paneele sind insbesondere Laminatfußbodenpaneele.

Beim Verlegen von Paneelen eines Hartfußbodenbelags werden separate bahnenförmige Schallschutzschichten verwendet, die weder mit dem Untergrund noch mit den Paneelen verklebt sind. Die schallmindernde Wirkung ist hier allerdings nur gering.

Zur Verbesserung der schalldämmenden Eigenschaften ist es daher Stand der Technik, dass das Paneel bereits vom Hersteller mit einer unterseitig aufgebrachten Schallschutzschicht verbunden ist. Das Verkleben der Schallschutzschicht mit dem Paneel ist vollflächig oder partiell. Zur Verbesserung der schallmindernden Wirkung kann im Zuge der Verlegung ein Verkleben mit dem Untergrund erfolgen. Dieses Verfahren ist jedoch sehr zeitaufwändig und wird daher nur selten angewandt. Nachteilig ist zudem, dass durch das notwendige Abbinden des Klebers keine sofortige Gebrauchstauglichkeit des Bodenbelags gegeben ist.

Die einzelnen Paneelen des Hartfußbodenbelags sind üblicher Weise mit umlaufenden Nuten und Federn ausgestattet, um sie zu einem großflächigen Belag zu vereinen. Dabei werden die einzelnen Elemente mittels eines Klebers wie beispielsweise Weißleim verbunden. Dazu wird der Kleber bauseitig vor dem Fügen im Nut-Federbereich aufgetragen, die Paneelen werden gefügt und mittels Spannvorrichtungen bis zum Abbinden des Klebers fixiert. Es bildet sich eine unlösbare Verbindung der einzelnen Paneelen aus. Dieses Verfahren ist vor allem deshalb recht zeitaufwändig, dass ein voller Fugenschluss nur dadurch zu erreichen ist, wenn der Kleber durch das Fügen der Paneele aus der Fuge quillt, der dann allerdings nach dessen Erhärten entfernt werden muss. Damit ist ein nicht unerheblicher Reinigungsaufwand des Hartfußbodenbelags verbunden.

Weiterhin können Paneele mittels eines aktivierbaren Klebers miteinander verbunden werden, der bereits vom Hersteller im Bereich der Nuten und Federn aufgetragen wird. Erst im Zuge des Verlegens erfolgt das Aktivieren des Klebers, wobei dieses Verkleben in Kombination auch mit mechanisch verriegelnden Profilausformungen der Nuten und Federn angewendet wird. Ein Verwenden solcher Klebesysteme bei nicht mechanisch verriegelnden Paneelen gestaltet sich allerdings als schwierig, da bis zum Abbinden des Klebers die Paneele zueinander nicht fixiert sind und dadurch offene Fugen zwischen den Kanten der einzelnen Paneele möglich sind, wodurch die Gebrauchstauglichkeit des Hartfußbodenbelags beeinträchtigt ist.

Der Erfindung liegt nun das technische Problem zugrunde, ein Paneel eines Hartfußbodenbelags mit einer damit verbundenen Schallschutzschicht anzugeben, mit dem das Verkleben des Paneels mit dem Untergrund ohne einen bauseitig eingesetzten Kleber ermöglicht wird.

Das zuvor aufgezeigte technische Problem wird erfindungsgemäß durch ein Paneel mit den Merkmalen des Anspruches 1 gelöst. Weitere vorteilhafte Ausgestaltungen der Erfindung sind in den Unteransprüchen angegeben.

Das Paneel weist demnach eine eine Oberseite und eine Unterseite aufweisende Trägerplatte und eine mit der Unterseite der Trägerplatte verbundene Schallschutzschicht auf. Erfindungsgemäß weist die Unterseite der Schallschutzschicht zumindest abschnittsweise eine Klebewirkung auf.

Eine Klebewirkung im Sinne der Erfindung besteht darin, dass die Schallschutzschicht nach dem Verlegen der Paneelen mit dem Unterboden fest verbunden ist. Eine feste Verbindung besteht dann, wenn die Schallschutzschicht nicht mehr gegen den Unterboden verschoben werden kann. Eine feste Verbindung bewirkt dabei eine unmittelbare Ankopplung an den Untergrund, so dass die Schallschutzwirkung verbessert wird.

Das Verkleben mit dem Untergrund ersetzt übliche Spannvorrichtungen, die beim Verleimen von mit einfachen Nut-Feder-Verbindungen gekoppelten Paneele für ein Fixieren bis zum Aushärten des Klebstoffes eingesetzt werden müssen. Daneben gewährleistet das Verkleben mit dem Untergrund ein dauerhaftes Fixieren der Paneele zueinander, unabhängig davon, ob die Nuten und Federn miteinander mechanisch verriegelt sind oder ob ein Kleber zum Verbinden der einzelnen Paneele verwendet wird.

Somit handelt es sich hier um einen multifunktionellen Fußboden, der sowohl einen hohen Verlegekomfort als auch eine hohe Gebrauchstauglichkeit kombiniert mit hochwertigen schallmindernden Eigenschaften bietet. Der hohe Verlegekomfort ist darin begründet, dass außer den üblichen Verlegewerkzeugen wie Hammer und Schlagklotz keine weiteren Werkzeuge und Hilfsmittel für das Verlegen notwendig sind. Ein separates Auftragen eines Klebemittels ist bauseitig durch den Verleger nicht mehr notwendig.

Als Schallschutzschichten eignen sich prinzipiell alle bereits marktgängigen Produkte für Fußbodenhartbeläge, vorausgesetzt, ein Verkleben ist auf Grund ihrer Beschaffenheit oder ihrer verwendeten Materialien mit der Unterseite des Paneels und mit dem Untergrund, auf welchem das Paneel verlegt werden soll, möglich.

Es ist besonders bevorzugt, eine Trennfolie auf die die Klebewirkung aufweisende Unterseite des Paneels aufzubringen. Die Trennfolie verhindert ein Verkleben der Paneele beim Übereinanderstapeln zu Verpackungseinheiten, in denen mehrere Paneele übereinander mit jeweils einer Oberseite benachbart zur Unterseite der nächsten Paneele zu liegen kommen.

In weiter bevorzugter Weise weisen die Paneele auf der Unterseite der mit der Unterseite der Trägerplatte verbundenen Schallschutzschicht zumindest abschnittsweise ein Klebemittel auf, das erst im Zuge des Verlegens des Bodens seine Klebekraft entfalten kann.

Für das Verkleben der Schallschutzschicht mit dem Fußboden eignen sich zunächst insbesondere Schmelzkleber, aber auch Doppelklebebänder sind gleichermaßen geeignet. Die Klebefläche kann vollflächig sein, eine partielle Verklebung - raupenförmig, netzförmige oder punktuell - ist aber ebenso denkbar.

Des weiteren ist für das Verkleben der Schallschutzschicht mit dem Untergrund ein Kleber erforderlich, der seine Klebeeigenschaft erst im Zuge des Verlegens voll entfaltet. Dafür sind verschiedene Klebstofftypen geeignet, die im folgenden beschrieben werden.

Ein Möglichkeit besteht in der Anwendung eines Kontaktklebers, der bei der werkseitigen Fertigung auf die Schallschutzschicht aufgebracht wird und mit einer Trennfolie gegen unbeabsichtigtes Verkleben geschützt wird. Als Kleber haben sich solche auf der Basis von Kollophonium-Harzen bewährt, die mit Acrylaten modifiziert sein können. Es sind aber auch alle anderen Kleber denkbar, die über permanent klebende Eigenschaften verfügen.

Eine andere Ausführungsform sind aktivierbare Klebstoffe in der Form, dass die Aktivierung erst im Zuge des Verlegens erfolgt. Als aktivierbare Klebstoffe sind Mehrkomponentenklebstoffe bekannt, bei denen eine Klebewirkung unter Aushärten erst dann einsetzt, wenn die Komponenten miteinander vermischt werden.

Insbesondere kommen dabei verkapselte Klebersysteme zum Einsatz. Hierbei handelt es sich beispielsweise um einen Zweikomponentenkleber, wobei zumindest eine für die Härtung erforderliche Komponente in Mikrokapseln eingeschlossen ist, die durch die Einwirkung von Druck oder Scherung aufbrechen und den in ihnen eingeschlossenen Inhalt dadurch freigeben. Neben der Härterkomponente können Härtungsbeschleuniger oder Härtungskatalysatoren verkapselt sein. Die Mikrokapseln werden in einer auch als Matrix bezeichneten Schicht auf die Unterseite der Schallschutzschicht aufgebracht, wobei die Matrix entweder nur eine Trägerfunktion ausübt oder selbst eine Komponente des Mehrkomponentenklebstoffes darstellt.

Eine weitere Ausführungsform eines aktivierbaren Klebers sind Kleber auf der Basis von Polyurethanen, die mit Wasser reagieren und dadurch ihre Klebewirkung entfalten. Das für das Aushärten erforderliche Wasser kann beispielsweise vom Untergrund oder aus der umgebenden Luft stammen. Ein separater Auftrag von geringen Mengen Wasser auf den Untergrund vor dem Verlegen ist ebenso möglich.

In weiter bevorzugter Weise ist auf der Unterseite des Paneels ein Klebemittel aufgebracht, das sowohl die Funktion der Schallschutzschicht als auch des Klebers zur Trägerplatte und zum Untergrund hin übernimmt. Dafür wird das Klebemittel vollflächig, netzartig, raupenförmig oder punktuell auf die Unterseite des Paneels aufgetragen und insbesondere anschließend nach dem Antrocknen mit einer Trennfolie abgedeckt. Die Trennfolie wird im Zuge des Verlegens entfernt.

Das Klebemittel kann zur Verbesserung der schalltechnischen Eigenschaften mit Füllstoffen auf mineralischer Basis (beispielsweise Quarzsand, Kreide, Talkum, Titanoxide oder Baryt), auf metallischer Basis (beispielsweise Eisen oder Aluminium) oder auf Basis von Kunststoffen vermengt sein. Die Verwendung von Fasern auf natürlicher oder künstlicher Basis ist ebenso denkbar wie die Mischung verschiedener Fasern und/oder Füllstoffen.

In weiter bevorzugter Weise ist vorgesehen, dass die Klebemittelschicht aus einem Kontaktklebstoff oder aus einem in einer Matrix eingebundenen Mehrkomponentenklebstoff besteht. In beiden Fällen des Kontaktklebstoffes können die oben genannten Klebstoffe und Materialien eingesetzt werden.

Eine weitere Ausgestaltung der vorliegenden Erfindung besteht in der Verwendung von Doppelklebebändern. Diese können im Zuge der Fertigung einfach auf der Unterseite des Paneels aufgetragen werden und verfügen über gute schalldämmende Eigenschaften, die sie durch das Verkleben mit dem Untergrund entfalten.

Alle möglichen Ausführungsformen von Doppelklebebändern sind möglich. Als Kernlage können beispielsweise Gewebe, Papiervliese, PVC-Folien, Polyethylenfolien, Polypropylenfolien oder Polyesterfolien verwendet werden. Die Kernlage kann aus einer dünnen Folie bestehen beispielsweise mit einer Folienstärke zwischen 0,1 und 1,5 mm. Die Verwendung eines geschäumten Werkstoffen ist ebenso möglich wie z.B. auf Basis von Polyethylen oder PVC, wobei die Stärke der schalldämmenden Schicht auch deutlich über 1,5 mm betragen kann.

Als geeignet für den Kleber des Doppelklebebandes haben sich Acrylate herausgestellt, aber alle anderen Kleber, die über permanent klebende Eigenschaften verfügen, sind denkbar. Die Trennfolie, die erst vor der Verlegung entfernt wird, kann ihre trennende Wirkung beispielsweise durch die Verwendung von Silikonen, Wachsen oder Fluorcarbone wie beispielsweise PTFE erhalten.

Das Verlegen der erfindungsgemäßen Paneelen ist einfach. Es sind zwei Verlegeprinzipien möglich.

An einer Ecke des Paneels wird die Trennfolie soweit zurückgezogen, dass sie über die der Ecke gegenüberliegenden Kante hinaus vorsteht. Das Paneel wird in üblicher weise verlegt und nach dem Erreichen der endgültigen Position wird die Trennfolie durch schräges Ziehen vom Bodenbelag entfernt. Das Paneel kann nun bei Bedarf noch nachjustiert werden. Zum Fixieren mit dem Untergrund wird senkrecht zur Oberfläche entweder durch das Körpergewicht des Verlegers oder unter Hinzuziehung eines Schlagwerkzeuges (z.B. dem Verlegehammer und einem Schutzbrett) Druck ausgeübt.

Die zweite Verlegemethode erfolgt in Analogie zur zuvor beschriebenen, allerdings wird die Trennfolie vor dem Legen der Paneele auf den Untergrund vollständig abgezogen. Diese Methode ist dann möglich, wenn durch den losen Kontakt der Paneelen mit dem Untergrund keine signifikante Verklebung erfolgt - es muss gewährleistet sein, dass ein Verschieben der Paneele auf dem Untergrund möglich ist. Bei einer entsprechenden Beschaffenheit des Untergrundes oder bei entsprechenden darauf abgestimmten Klebern ist das möglich.

Der Bodenbelag ist im übrigen auch geeignet, ohne Verkleben mit dem Untergrund angewandt zu werden. Dazu wird die Trennfolie dann im Zuge der Verlegung nicht entfernt, wobei der Bodenbelag seine schalldämmende Wirkung aber dennoch entfalten kann.

Im folgenden wird die Erfindung anhand von Ausführungsbeispielen näher erläutert, wobei auf die beigefügte Zeichnung Bezug genommen wird. In der Zeichnung zeigen
- Fig. 1: zwei Ausführungsbeispiele eines erfindungsgemäßen Paneels,
- Fig. 2: eine Anwendung des in Fig. 1 dargestellten Paneels für die Renovierung eines bestehenden Bodenbelags,
- Fig. 3: das in Fig. 1 dargestellte Paneel in Zusammenwirken mit weiteren Paneelen,
- Fig. 4: eine Ansicht eines zu verlegenden Hartfußbodenbelags zur Beschreibung einer Verlegemethode und
- Fig. 5: eine schematische Darstellung zur Erläuterung des Messversuches aus Beispiel 4.

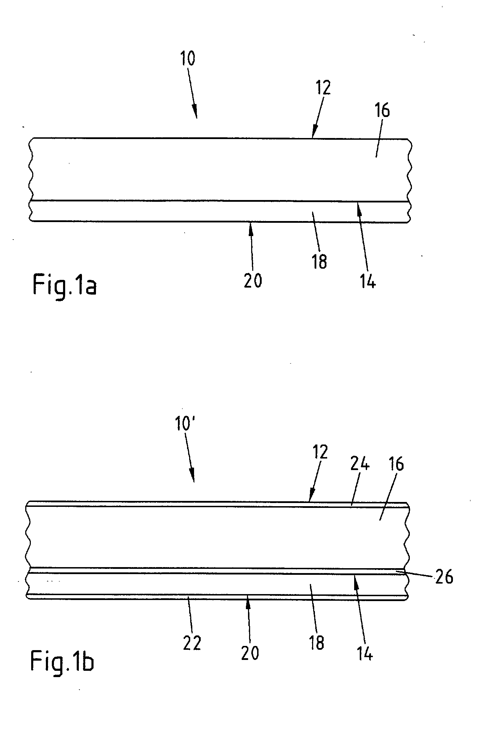

Fig. 1a zeigt ein erstes Ausführungsbeispiel eines erfindungsgemäßen Paneels 10 mit einer mit einer Oberseite 12 und eine Unterseite 14 versehenen Trägerplatte 16. Mit der Unterseite 14 der Trägerplatte 16 ist eine Schallschutzschicht 18 verbunden. Erfindungsgemäß weist die Unterseite 20 der Schallschutzschicht 18 zumindest abschnittsweise eine Klebewirkung auf. Diese Klebewirkung kann durch unterschiedliche Ausgestaltungen der Erfindung durch verschiedene Klebemittel bewirkt werden.

Fig. 1b zeigt in Abwandlung des in Fig. 1a dargestellten Ausführungsbeispiels die Trägerplatte 16 eines Paneels 10', die mit einer Dekorschicht 24 und mit einem Gegenzug 26 beschichtet ist, so dass die Schichten 24 und 26 die Oberseite 12 und die Unterseite 14 der Trägerplatte 16 bilden. Mit dem Gegenzug 26 ist die Schallschutzschicht 18 verklebt, die an ihrer Unterseite 20 die Klebewirkung entfaltet. Deshalb ist aus den oben beschriebenen Gründen bei dem in Fig. 1b dargestellten Ausführungsbeispiel die Trennfolie 22 an der Unterseite 20 angebracht und deckt diese im wesentlichen vollständig ab.

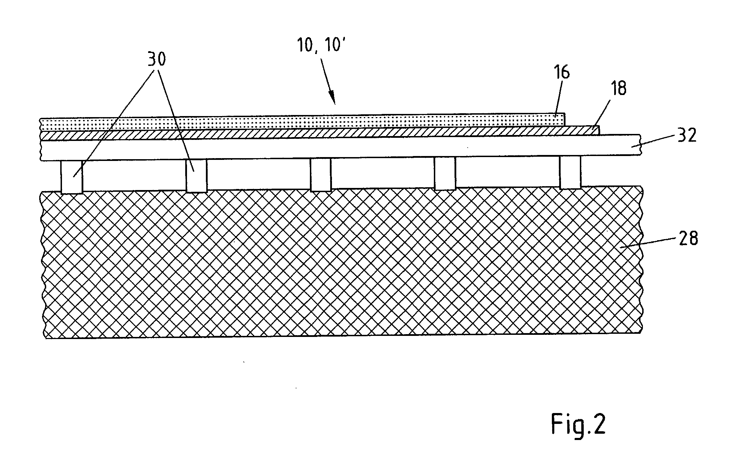

Fig. 2 stellt eine Anwendung des erfindungsgemäßen Hartbodenbelags als Renovierboden dar. Es handelt sich um einen Laminatfußboden, der im Zuge einer Sanierung oder Renovierung direkt über einen bestehenden Bodenbelag gelegt werden kann, ohne den alten Bodenbelag entfernen zu müssen.

Auf einem Unterboden 28 befindet sich der ursprüngliche Boden, der hier exemplarisch durch auf Unterlaghölzern 30 befindlicher Bodenbretter 32 dargestellt ist. Darauf wird nun ein Hartbodenbelag als Renovierungsboden gelegt, der aus der Trägerplatte 16 und der Schallschutzschicht 18 besteht. Ein solcher Hartbodenbelag hat als Renovierungsboden vorzugsweise eine geringe Dicke, damit kein Kürzen der Türblätter erfolgen muss.

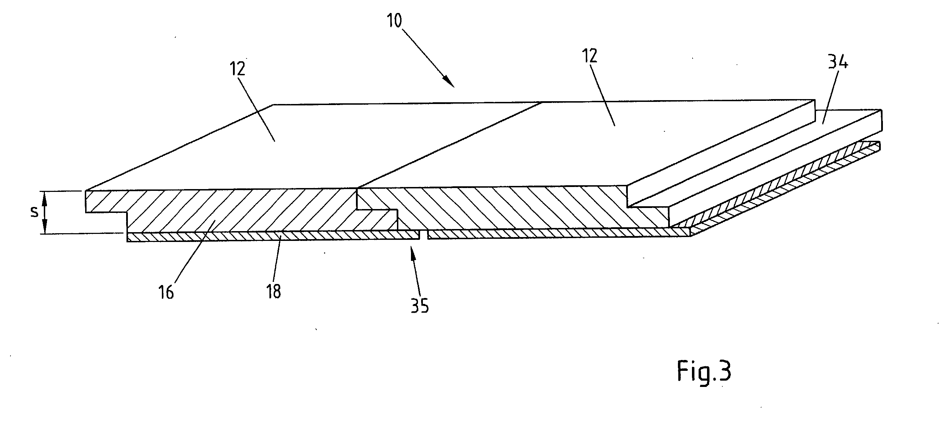

Fig. 3 zeigt im Detail den Aufbau eines Hartbodenbelags in einer geschnittenen perspektivischen Darstellung. Auch hier bezeichnen gleiche Bezugszeichen gleiche Bauteile wie in den zuvor beschriebenen Figuren. Die Dicke s jedes Paneels 10 liegt im Bereich zwischen 1 und 6 mm, bevorzugt zwischen 3 und 5 mm. Die einzelne Paneele 10 des Bodens weisen einen umseitig verlaufenden Falz 34 auf, der es ermöglicht, durch Überlappen der Falze der einzelnen Paneel einen geschlossenen Bodenbelag zu bilden. Anstelle des Falzes 34 kann aber auch eine einfache oder mechanische verriegelbare Nut-Feder-Profilierung vorgesehen sein.

Gerade dünne Laminatfußbodenpaneele eignen sich für den Einsatz als Renovierboden, da damit ein großer Dickenauftrag vermieden werden kann, der ansonsten Veränderungen an den Türblättern erforderlich machen würde. Da aber Nut-Feder-Verbindungen bei dünnen Paneelen nur unter technischen Schwierigkeiten ausgebildet werden können, ergibt sich gerade bei Renovierböden ein Vorteil des erfindungsgemäßen Paneels. Denn für ein möglichst fugenfreies Verlegen der Paneelen zueinander ist es wegen der integralen Schalldämmungs- und Klebeeigenschaften nicht notwendig, Nut-Feder-Verbindungen für ein relatives Fixieren der Paneelen zueinander einzusetzen. Dagegen kann man die einfachere Falzverbindung einsetzen oder die Paneele nur mit stumpfen Seitenkanten versehen.

Des weiteren ist in Fig. 3 dargestellt, dass die Schallschutzschicht 18 so ausgeführt ist, dass sich im verlegten Zustand eine Überlappung ergibt, wie mit dem Pfeil 34 angedeutet ist. Das soll die Fixierung der einzelnen Paneele zueinander noch unterstützen. Es kann auf einen Falz oder eine Profilierung im Stoßbereich der einzelnen Paneele aber auch vollkommen verzichtet werden.

### Beispiel 1:

Auf die Unterseite von rechteckigen Laminatfußbodenpaneelen, die an deren Längsseiten und Querseiten mit Nuten bzw. Federn versehen sind und über eine Dicke von 7 mm verfügen, wird ein handelsübliches Doppelklebeband mit einer textilen Gewebemittellage aufgeklebt. Das Doppelklebeband ist allseitig bündig mit der unteren Fläche - es steht somit nirgends über die Begrenzungskanten der unteren Fläche vor.

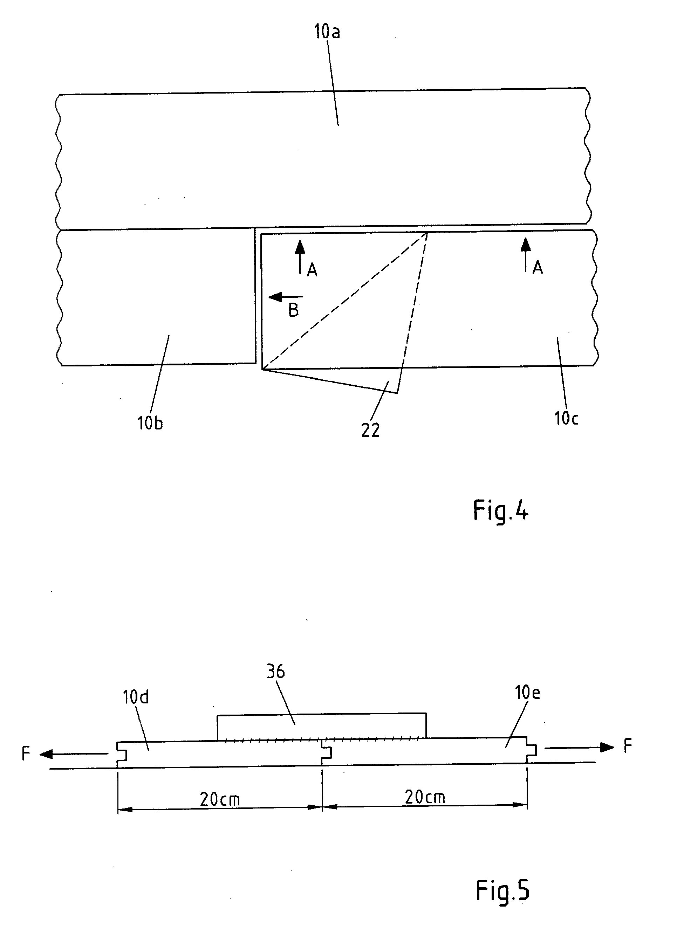

Für die Vereinigung der Paneelen zu einem geschlossenen Bodenbelag wird, wie in Fig. 4 beispielhaft anhand der bereits verlegten Paneele 10a und 10b und des neu zu verlegenden Paneels 10c dargestellt ist, die Trennfolie das Paneel 10c über die linke obere Ecke schräg nach unten gezogen, so dass die Trennfolie 22 etwas über die untere Begrenzungskante des Paneels 10c vorsteht. Das Paneel 10c wird vorzugsweise möglichst nahe an die endgültige Position herangebracht. Dazu wird das Paneel 10c auf den Untergrund gelegt, so dass der Abstand der Kanten der bereits verlegten Paneele 10a und 10b und dem neu zu verlegenden Paneel 10c nur wenige Millimeter bzw. 1 bis 2 Zentimeter beträgt.

Das Paneel 10c wird dann an der Längsseite an die korrespondierenden Kante des bereits verlegten Paneels geschoben (Pfeile A) und wenn nötig unter Einsatz eines Hammers und eines Schlagklotzes die Fuge zwischen den beiden obersten Kanten der Paneele vollständig geschlossen.

Im Anschluss daran wird das Paneel in dessen Längsrichtung zum bereits verlegten Paneel 10a mittels Hammer und Schlagklotz bewegt (Pfeil B), so dass sich auch an der Querseite die Fuge zum Paneel 10b vollständig schließt.

Sodann wird die Trennfolie 22 vollständig abgezogen, indem diese durch Zug von links oben nach rechts unten unterhalb des Paneels 10c herausgezogen wird.

Nach einer Kontrolle, ob die Position des Paneels 10c korrekt ist, wird durch Druck auf die Oberseite des Paneels 10c das Verkleben mit dem Unterboden hergestellt. In der Regel reicht als Druck das Eigengewicht des Bodenlegers aus, es können aber auch Hilfsmittel wie ein Hammer und eine planare Platte (z.B. Holzbrett) verwendet werden.

Es wird darauf hingewiesen, dass die Reihenfolge des Verlegens auch umgekehrt erfolgen kann, also zunächst an der Querseite des Paneels 10c (Pfeil B) und dann an der Längsseite (Pfeile A).

### Beispiel 2:

Dieses Beispiel beschreibt den Einsatz eines sogenannten Renovierbodens. Einzelne Fußbodenpaneele mit einer Dicke von 4 mm sind umseitig mit einem Falz versehen. Auf der Unterseite wird im Zuge der Paneelherstellung ein Baukleber auf Basis eines mittels Acrylat modfizierten Kollophoniumharzes aufgewalzt. Nach Abtrocknen des Klebers wird eine Trennfolie aufgelegt und einzelne Paneele zu einer Verpackungseinheit mit 12 Stück abgepackt.

Der Renovierboden wird auf einem alten Parkettboden verlegt. Der Altbelag wird zuvor durch einfaches Staubsaugen gesäubert und der Renovierboden unmittelbar auf dem Altbelag fixiert. Dazu wird die Trennfolie entfernt und die Verlegung analog zu Beispiel 1 durchgeführt. Das Ergebnis ist ein geschlossener Fußbodenbelag von geringer Dicke und hoher Gebrauchstauglichkeit.

### Beispiel 3:

Ein Renovierboden aus Beispiel 2 wird im Zuge der industriellen Herstellung zusätzlich auf den nach oben gerichteten Falzflächen (Figur 3, Bezugszeichen 34) mit einem verkapselten Klebersystem versehen. Die zur Oberseite der Paneelen 10 parallelen Falzflächen werden mit einer Schicht aus Klebermatrix und mit einer Schicht aus Kapseln beschichtet. Diese Schicht weist eine Stärke zwischen 0,15 bis 0,25 mm auf. Die Kapseln beinhalten ein organisches Peroxid, das im Zuge des Fügens der Bauteile durch das Aufbrechen der Kapseln austritt und die Härtungsreaktion der Klebermatrix bewirkt.

Der Boden wird in Analogie zu Beispiel 2 verlegt, wobei beim Verlegen besonderes Augenmerk darauf gelegt wird, dass die zur Oberfläche parallelen Fügeflächen des Falzes aneinander gleiten, um die Kapseln aufzubrechen. Zudem wird nach dem Fixieren der Paneele zum Unterboden besonders Druck auf die Falzflächen ausgeübt, um ein gutes Verkleben des Falzes zu gewährleisten.

### Beispiel 4:

Dieses Ausführungsbeispiel soll anhand von Fig. 5 aufzeigen, welche Kräfte notwendig sind, um zwei zum Untergrund hin verklebte Paneele 10d und 10e voneinander weg zu bewegen. Die Paneele 10d und 10e, die den Beispielen 1 und 2 entsprechen, verfügen über herkömmliche Nuten und Federn, die üblicher Weise mit Leim miteinander verklebt werden. Aus den Paneelen 10d und 10e werden Prüfstreifen mit einer Breite von 10cm und einer Länge von 20cm geschnitten. Die Paneele 10d und 10e werden mittels der Nuten und Federn miteinander vereint und nach Abziehen der Trennfolie werden die beiden Teile mit einem über die jeweils halbe Fläche der einzelnen Paneele 10d und 10e reichenden Gegenstück 36 (hier ein Laminatboden, der einen bereits bestehenden Fußbodenbelag darstellt) verklebt.

Die Prüfkörper 10d und 10e werden in einer Universalprüfmaschine auf Zug senkrecht zur Verbindungskante in Richtung F der beiden Paneele belastet, so dass die Paneele vom Gegenstück abgleiten.

Zum Vergleich werden in analoger weise mittels Leim verklebte Paneele mit dem selben Nut-Feder-Profil bzw. mechanisch verriegelnde Paneele (Klick-Systeme) geprüft. Hier wird verständlicher weise kein Gegenstück als die Paneele verbindendes Element verwendet. Die ermittelte maximale Zugkraft ist in nachfolgender Tabelle zusammengefasst (Mittelwert aus 10 Prüfungen):
- Doppelklebeband: 41,5 N/cm
- Kollophonium-Baukleber: 50,2 N/cm
- Herkömmliches mechanisch verriegelndes Profil (Klick-System) 25 - 50 N/cm
- Nut-Federprofil mit Weißleim verleimt 40 - 105 N/cm

## Patentansprüche

1. Paneel, insbesondere Laminatfußbodenpaneel,
- mit einer eine Oberseite (12) und eine Unterseite (14) aufweisenden Trägerplatte (16),
- mit einer mit der Unterseite (14) der Trägerplatte (16) verbundenen Schallschutzschicht (18),
**dadurch gekennzeichnet,**
- **dass** die Unterseite (20) der Schallschutzschicht (18) zumindest abschnittsweise eine Klebewirkung aufweist.

2. Paneel nach Anspruch 1,
**dadurch gekennzeichnet,**
**dass** eine Trennfolie (22) die Unterseite (20) abdeckt.

3. Paneel nach Anspruch 1 oder 2,
**dadurch gekennzeichnet,**
**dass** die Unterseite (20) der Schallschutzschicht (18) zumindest abschnittsweise mit einem Klebemittel beschichtet ist.

4. Paneel nach Anspruch 3,
**dadurch gekennzeichnet,**
**dass** das Klebemittel im wesentlichen vollflächig auf der Unterseite (20) verteilt angebracht ist.

5. Paneel nach Anspruch 3 oder 4,
**dadurch gekennzeichnet,**
**dass** das Klebemittel einen Kontaktklebstoff aufweist.

6. Paneel nach Anspruch 5,
**dadurch gekennzeichnet,**
**dass** der Kontaktklebstoff aus mit Acrylaten modifizierten Kollophonium-Harzen besteht.

7. Paneel nach Anspruch 3 oder 4,
**dadurch gekennzeichnet,**
**dass** das Klebemittel einen aktivierbaren Klebstoff aufweist.

8. Paneel nach Anspruch 7,
**dadurch gekennzeichnet,**
**dass** der aktivierbare Klebstoff aus einem Mehrkomponentenklebstoff, insbesondere Zweikomponentenklebstoff besteht.

9. Paneel nach Anspruch 8,
**dadurch gekennzeichnet,**
**dass** mindestens eine Komponente des aktivierbaren Klebstoffes in Mikrokapseln eingeschlossen ist, die durch Einwirkung von Druck oder Scherung aufbrechen und den in ihnen enthaltenen Inhalt zumindest teilweise freigeben.

10. Paneel nach Anspruch 8,
**dadurch gekennzeichnet,**
**dass** der aktivierbare Klebstoff aus Polyurethan besteht, der mit Wasser aktivierbar ist.

11. Paneel nach Anspruch 1 oder 2,
**dadurch gekennzeichnet,**
**dass** die Schallschutzschicht (10) eine Klebemittelschicht ist.

12. Paneel nach Anspruch 11,
**dadurch gekennzeichnet,**
**dass** die Klebemittelschicht Füllstoffe auf mineralischer Basis, auf metallischer Basis oder auf Basis von Kunststoffen aufweist.

13. Paneel nach Anspruch 11,
**dadurch gekennzeichnet,**
**dass** die Klebemittelschicht Fasern auf natürlicher und/oder Fasern auf künstlicher Basis aufweist.

14. Paneel nach Anspruch 11, 12 oder 13,
**dadurch gekennzeichnet,**
**dass** die Klebemittelschicht aus einem Kontaktklebstoff oder aus einem in einer Matrix eingebundenen Mehrkomponentenklebstoff besteht.

15. Paneel nach Anspruch 1 oder 2,
**dadurch gekennzeichnet,**
**dass** die Schallschutzschicht (10) als Doppelklebeband ausgebildet ist.

16. Paneel nach Anspruch 15,
**dadurch gekennzeichnet,**
**dass** der Kleber des Doppelklebebandes ein Acrylat ist.

17. Paneel nach Anspruch 15 oder 16,
**dadurch gekennzeichnet**,
das die Kernlage des Doppelklebebandes ein Gewebe, ein Papiervlies oder eine Folie aus PVC, Polyethylen, Polypropylen oder Polyester aufweist.

18. Paneel nach Anspruch 15 oder 16,
**dadurch gekennzeichnet,**
**dass** die Kernlage des Doppelklebebandes einen geschäumten Werkstoff aufweist, insbesondere auf Basis von Polyethylen oder PVC.

19. Paneel nach einem der Ansprüche 1 bis 18,
**dadurch gekennzeichnet,**
**dass** die Dicke (s) der Trägerplatte (16) einen Wert zwischen 1 und 6 mm, vorzugsweise zwischen 3 und 5 und insbesondere 4 mm aufweist.

20. Paneel nach Anspruch 19,
**dadurch gekennzeichnet**,
das die Seitenkanten des Paneels mit einer Falz oder stumpf ausgebildet sind.
